# DEMANDE DE BREVET EUROPEEN

(11) **EP 1 939 017 A1**
(43) Date de publication de la demande: **02.07.2008**
(21) Numéro de dépôt: 07023371.3
(22) Date de dépôt: 03.12.2007
(51) Int. Cl.: B60C 23/04

(54) **Unité électronique de mesure de paramètres de fonctionnement d'un pneumatique monté sur une roue de véhicule**

(30) Priorité: 29.12.2006 FR 0611515
(71) Demandeur: Siemens VDO Automotive S.A.S., 31036 Toulouse Cédex 01 (FR)
(72) Inventeur: Jurek, Gilles, 31830 Plaisance Du Touch (FR)

(57) **Abrégé**

L'invention concerne une unité électronique de mesure de paramètres de fonctionnement d'un pneumatique monté sur une roue de véhicule, comprenant un boîtier (1) intégrant une carte électronique (11) et une pile (25), telle que pile bouton. Selon l'invention, cette unité électronique comprend un couvercle (33) d'obturation du boîtier (1), délimitant, avec la carte électronique (11), une chambre (39) adaptée pour loger la pile (25) connectée sur la dite carte électronique. De plus, des moyens d'étanchéité compressibles (18) sont disposés dans la chambre (39) et adaptés pour être comprimés, d'une part, en périphérie de cette chambre (39), entre la carte électronique (11) et le couvercle (33), de façon à isoler hermétiquement cette chambre (39), et, d'autre part, au contact de la pile (25), de façon à assurer un blocage mécanique de la dite pile.

## Description

L'invention concerne une unité électronique de mesure de paramètres de fonctionnement d'un pneumatique monté sur une roue de véhicule.

De plus en plus de véhicules automobiles possèdent des systèmes de surveillance et/ou de mesures de paramètres comportant des capteurs montés sur le dit véhicule.

A titre d'exemple concernant de tels systèmes, il peut être cité les systèmes de surveillance comportant des unités électroniques montées sur chacune des roues de véhicules, dédiées à la mesure de paramètres, tels que pression et/ou température à l'intérieur des pneumatiques équipant ces roues, et destinées à informer le conducteur de toute variation anormale du paramètre mesuré.

Ces systèmes de surveillance comportent classiquement :
- montée sur chacune des roues du véhicule, une unité électronique comprenant un boîtier intégrant :
   - une carte électronique dotée d'une face, dite de connexion, formant un circuit imprimé de connexion de composants électroniques, notamment microprocesseur et capteur(s) de mesure, et d'une face opposée, dite d'alimentation électrique,
   - et une pile, telle que pile bouton, d'alimentation électrique des composants électroniques,
- et, montée sur le véhicule, une unité centrale de réception des signaux émis par les boîtiers électroniques, dotée d'un calculateur intégrant un récepteur radiofréquence connecté à une antenne.

De plus, de façon usuelle, compte tenu de l'environnement difficile dans lequel sont exploitées ces unités électroniques, et des sollicitations mécaniques importantes (vibrations...) auxquelles elles sont soumises, les boîtiers sont systématiquement remplis d'une résine assurant leur étanchéité et la tenue mécanique des dites unités électroniques.

Cette solution, considérée actuellement comme la seule susceptible de garantir une durée de vie des unités électroniques satisfaisant aux exigences des constructeurs automobiles, s'avère toutefois présenter plusieurs inconvénients.

En effet, et en premier lieu, le fait de noyer les piles dans de la résine conduit à rendre plus complexes et plus coûteuses les opérations, obligatoires, de récupération de ces dernières, et de recyclage des unités électroniques.

De plus, les piles noyées dans la résine n'étant pas interchangeables, l'obtention d'une durée de vie des unités électroniques satisfaisant aux exigences des constructeurs automobiles (dix ans de façon usuelle), impose d'utiliser des piles d'une taille conséquente et de complexifier l'électronique et le système de gestion de la puissance, afin d'optimiser la consommation de courant.

La présente invention vise à pallier ces inconvénients et a pour premier objectif de fournir une unité électronique conçue pour permettre une récupération aisée de la pile en fin de vie de la dite unité électronique.

Un autre objectif de l'invention est de fournir une unité électronique conçue pour permettre un changement de la pile en cours de vie de la dite unité électronique.

A cet effet, l'invention vise une unité électronique de mesure de paramètres de fonctionnement d'un pneumatique monté sur une roue de véhicule, comprenant un boîtier intégrant une carte électronique et une pile, telle que pile bouton, la dite unité électronique comprenant, en outre, selon l'invention :
- des moyens de connexion électrique entre la pile et la carte électronique comportant, pour chaque pôle de la pile, au moins un plot de connexion ménagé sur la face d'alimentation électrique de la carte électronique, et un contact solidaire de la pile et doté d'une semelle d'appui sur le dit plot de connexion,
- un couvercle d'obturation du boîtier :
   - un des deux éléments, boîtier ou couvercle, présentant une forme interne adaptée pour délimiter un siège périphérique de réception de la carte électronique, ménagé sur le pourtour d'une première chambre adaptée pour loger les composants électroniques de la dite carte électronique positionnée sur le dit siège périphérique,
   - et l'autre élément, couvercle ou boîtier, délimitant, avec la carte électronique positionnée sur le siège périphérique, une seconde chambre adaptée pour loger la pile connectée sur la dite carte électronique,
- et des moyens d'étanchéité compressibles disposés dans la seconde chambre et adaptés, lors de l'obturation du boîtier par le couvercle, pour être comprimés :
   - d'une part en périphérie de la seconde chambre, entre la carte électronique et l'élément, couvercle ou boîtier, délimitant la dite seconde chambre, de façon à isoler hermétiquement cette seconde chambre,
   - et d'autre part au contact de la pile, de façon à assurer un blocage mécanique de la dite pile, et une connexion électrique entre cette dernière et la carte électronique par appui de la semelle de chaque contact sur un plot de connexion.

L'invention a donc consisté, en premier lieu, à réaliser une unité électronique comportant deux éléments, un boîtier et un couvercle, délimitant deux chambres internes indépendantes séparées l'une de l'autre par la carte électronique :
- une première chambre adaptée pour loger la partie électronique (composants électroniques), et éventuellement, et de façon avantageuse, destinée à être remplie d'une résine apte à assurer la protection de cette partie électronique,
- et une seconde chambre étanche adaptée pour loger la pile en assurant l'intégrité de cette dernière.

De plus, la connexion électrique entre la pile et la carte électronique consiste en une connexion non permanente conçue pour garantir la connexion malgré les contraintes importantes sollicitant l'unité électronique, tout en autorisant une récupération aisée de la pile en fin de vie : contacts de la pile maintenus en appui sur des plots de connexion ménagés sur la carte électronique, grâce à la pression exercée sur la pile par la compression de moyens d'étanchéité disposés dans la seconde chambre.

Selon l'invention, l'étanchéité et la tenue mécanique des unités électroniques sont ainsi garanties tout en autorisant un accès rapide et aisé à la pile, en vue de sa récupération en fin de vie, obtenu après une simple séparation du couvercle et du boîtier.

De plus, et de façon avantageuse, les unités électroniques selon l'invention comprennent avantageusement des moyens amovibles de fixation du boîtier avec le couvercle, permettant d'accéder à la pile sans destruction du couvercle ou du boîtier, et conférant ainsi un caractère interchangeable à la dite pile en cours de vie des unités électroniques, dont découlent tous les avantages liés à une telle interchangeabilité.

Selon un mode de réalisation avantageux de l'invention, chaque contact de la pile forme un pied adapté pour ménager un espace entre la dite pile et la face d'alimentation électrique de la carte électronique. Cette disposition qui conduit à « surélever » la pile par rapport à la face d'alimentation de la carte électronique, garantit, en effet, une isolation électrique de cette pile par rapport à cette carte électronique.

De plus, de façon avantageuse selon l'invention, les moyens d'étanchéité comprennent une plaque d'étanchéité en matériau compressible disposée de façon à s'étendre sur la face d'alimentation électrique de la carte électronique, la dite plaque d'étanchéité étant percée de lumières aptes à loger chacune le pied d'un contact de la pile, et présentant une épaisseur adaptée pour être comprimée par la dite pile lors de l'obturation du boîtier par le couvercle.

Outre leur fonction première, de tels moyens d'étanchéité constituent ainsi des éléments de guidage pour les contacts de la pile, qui facilitent aussi bien le montage initial que les éventuelles opérations de changement de cette pile.

Cette plaque d'étanchéité comporte, en outre, avantageusement une lumière centrale ménagée de façon à s'étendre à l'aplomb de la pile, et présentant des dimensions inférieures à celles de la dite pile. Une telle lumière a pour fonction de favoriser une expansion de matière dans le plan de la plaque, apte à augmenter l'effet de blocage de la pile et réduire l'effort de compression ainsi que la force réactive appliquée sur la pile.

Par ailleurs, les moyens de connexion électrique entre la pile et la carte électronique comportent avantageusement, pour chaque pôle de la pile, une paire de plots de connexion ménagés sur la face d'alimentation électrique de la carte électronique, et une paire de contacts associés solidaires de la pile, chaque paire de plots définissant un axe (x1), respectivement (x2), tels que les dits axes soient sécants et forment une croix.

Cette disposition conduit, en premier lieu, à doubler le nombre de zones de connexion pour chaque pôle de la pile, et ainsi à améliorer la robustesse de la connexion. De plus, elle permet d'augmenter la stabilité mécanique de la pile, et donc de parfaire la résistance aux contraintes mécaniques.

De plus, les deux plots d'une même paire sont avantageusement séparés d'une distance différente d'une paire de plots par rapport à l'autre paire de plots, de façon à éviter une interversion des pôles. On obtient ainsi un dispositif de détrompage qui empêche de placer la pile en contact avec des plots non appropriés

Par ailleurs, en vue d'augmenter la robustesse de la connexion électrique, l'élément, couvercle ou boîtier, délimitant la seconde chambre, comporte avantageusement, pour chaque plot de connexion ménagé sur la face d'alimentation électrique de la carte électronique, une butée d'appui, contre le dit plot, de la semelle d'un contact de la pile.

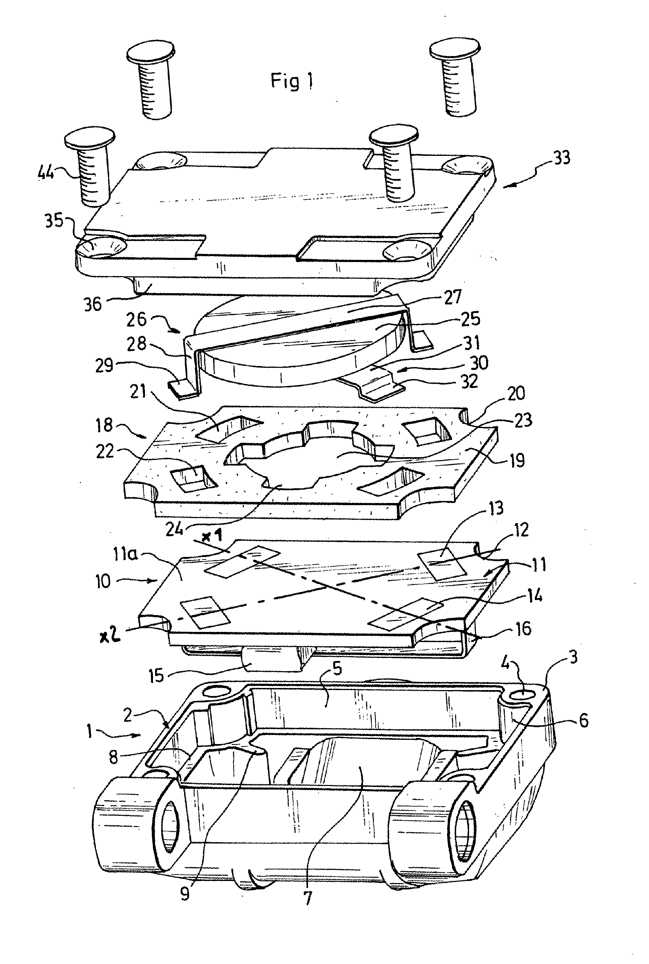

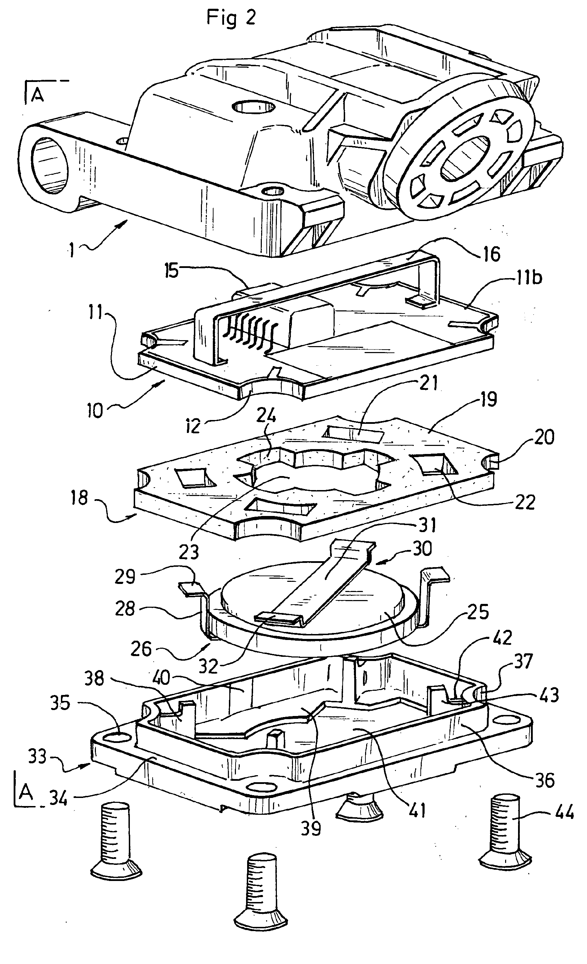

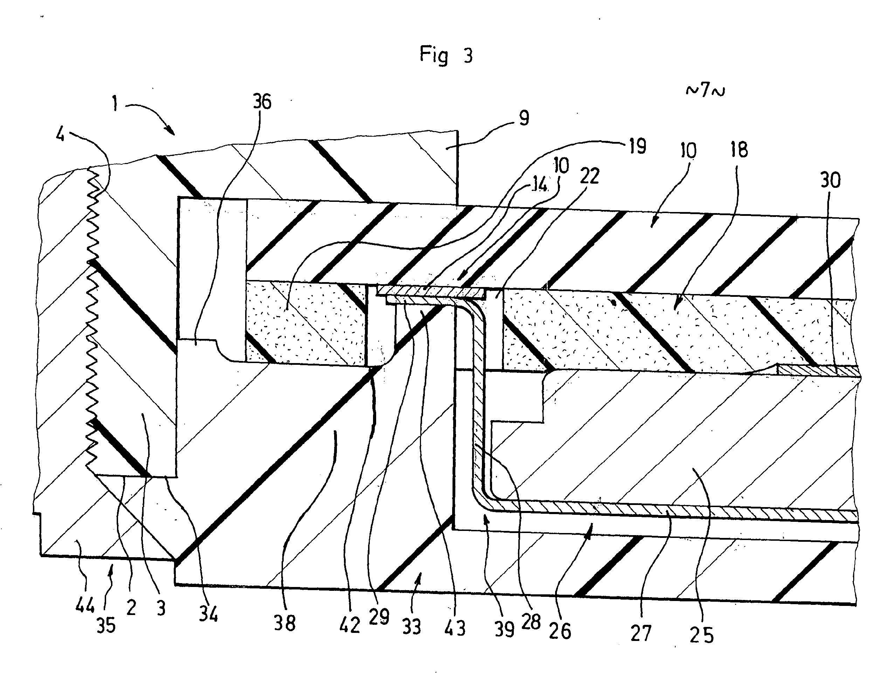

D'autres caractéristiques, buts et avantages de l'invention ressortiront de la description détaillée qui suit en référence aux dessins annexés qui en représentent à titre d'exemple non limitatif un mode de réalisation préférentiel. Sur ces dessins :
- **les** **figures 1** **et** **2** sont deux vues en perspective représentant en mode éclaté, avec des angles de prise de vue décalés de 180°, les divers éléments constitutifs d'une unité électronique selon l'invention,
- **et la** **figure 3** est une coupe longitudinale partielle par un plan A (figure 2), d'une unité électronique selon l'invention représentée dans le mode assemblé des éléments constitutifs.

L'unité électronique selon l'invention représentée à titre d'exemple aux figures est destinée à être montée sur une roue d'un véhicule en vue de la mesure de paramètres de fonctionnement (pression, température, accélération...) du pneumatique équipant de la dite roue.

Cette unité électronique comprend, en premier lieu, un boîtier 1 doté d'une face de jonction ouverte 2 délimitant une chambre, dite chambre intermédiaire 5, de forme générale parallélépipédique rectangle. De plus, un plot 3 de forme générale cylindrique, percé axialement d'un alésage longitudinal taraudé 4, s'étend dans chacun des angles de la chambre intermédiaire 5, de sorte que chacun des dits angles se trouve tronqué par une portion de paroi convexe 6.

Le fond du boîtier 1 délimite, en outre, dans le prolongement de la chambre intermédiaire 5, et délimitée par rapport à cette dernière par un épaulement périphérique 8, une autre chambre 7, dite première chambre, adaptée pour loger « l'électronique » de l'unité électronique.

De plus, un éperon interne diagonal 9 s'étend dans chacun des angles de cette première chambre 7, chacun des dits éperons présentant une face supérieure plane coplanaire avec le rebord périphérique 8, de façon à définir une face d'appui plane avec ce dernier.

L'unité électronique selon l'invention comprend, en outre, une « électronique 10 » comportant, en premier lieu, une carte électronique 11 adaptée pour venir se loger dans la chambre intermédiaire 5, en appui sur le rebord périphérique 8 et les éperons 9, qui forment ainsi un siège de réception de la dite carte électronique.

A cet effet, cette carte électronique 11 présente une forme générale rectangulaire tronquée au niveau de chacun de ses angles par un arc concave 12.

Cette carte électronique 11 présente, par ailleurs, une première face 11 a (figure 1), dite face d'alimentation électrique, sur laquelle sont ménagés quatre plots de connexion électrique 13, 14 de forme rectangulaire, positionnés chacun à proximité d'un des angles de la carte électronique 11, de façon que la diagonale s'étendant à partir du dit angle définisse un axe de symétrie transversal pour le dit plot.

Du point de vue connexion électrique, ces plots de connexion 13, 14 sont répartis en deux paires, respectivement une paire de plots 13 et une paire de plots 14, chacune des dites paires de plots 13, 14 définissant un axe (x1), respectivement (x2), correspondant à une des diagonales de la carte électronique 11.

De plus, les deux plots 13 formant une des deux paires de plots sont séparés d'une distance différente de celle séparant les deux autres plots 14 formant la seconde paire de plots.

La carte électronique 11 présente, en outre, une seconde face 11 b (figure 2), dite face de connexion, formant un circuit imprimé de connexion des composants électroniques 15, notamment microprocesseur et capteur(s) de mesure, de l'unité électronique, disposés pour s'étendre dans la première chambre 7 lorsque la dite carte électronique est positionnée en appui sur le rebord périphérique 8 et les éperons 9.

L'unité électronique selon l'invention comprend également des moyens d'étanchéité 18 composés d'une plaque d'étanchéité en mousse compressible 19 adaptée pour s'étendre sur la face d'alimentation 11a de la carte électronique 11, et présentant, à cet effet, les mêmes forme et dimensions que cette dernière, à savoir, notamment, une forme rectangulaire tronquée au niveau de chacun de ses angles par un arc concave 20.

De plus, cette plaque d'étanchéité 19 est percée de quatre lumières 21, 22 de formes et dimensions conjuguées à celles des plots de connexion 13, 14, chacune des dites lumières étant, en outre, ménagée de façon à se trouver à l'aplomb d'un des dits plots de connexion lorsque la plaque d'étanchéité 19 est positionnée sur la carte électronique 11.

Cette plaque d'étanchéité 19 est également percée d'une lumière centrale cylindrique 23 « agrandie » par quatre oreilles 24 de forme rectangulaire réparties sur le pourtour de la dite lumière centrale.

L'unité électronique selon l'invention comprend, par ailleurs, d'une part, une pile bouton 25 de diamètre supérieur à celui de la lumière centrale 23 ménagée dans la plaque d'étanchéité 19, et d'autre part, des moyens de connexion électrique entre cette pile 25 et les plots de connexion 13, 14 de la carte électronique 11.

Ces moyens de connexion comportent, pour chaque pôle de la pile 25, un contact 26, 30 présentant la forme d'un portique comportant :
- une traverse 27, 31 solidarisée, par exemple par soudure, sur une face de la pile 25, et de longueur supérieure au diamètre de cette dernière,
- et deux montants ou pieds, tels que 28, prolongés chacun d'une semelle 29, 32 d'appui sur un plot de connexion 13, 14.

L'unité électronique selon l'invention comprend enfin un couvercle 33 adapté pour obturer le boîtier 1, et présentant, à cet effet, une face de jonction 34 (figure 2) de forme générale perpendiculaire adaptée pour obturer la face de jonction 2 du dit boîtier, dans laquelle sont ménagés quatre orifices chanfreinés, tels que 35, pour l'introduction de vis de fixation 44 conjuguées des alésages taraudés 4 du boîtier 1.

Ce couvercle 33 comprend, en outre, une jupe d'étanchéité 36 s'étendant en saillie par rapport à la face de jonction 34, et adaptée pour s'ajuster dans la chambre intermédiaire 5 du boîtier 1.

A cet effet, cette jupe 36 délimite, avec la face de jonction 34 du couvercle 33, un logement, dit seconde chambre 39, de forme générale parallélépipédique rectangle dont chacun des angles est tronqué par une portion de paroi concave 37.

De plus, un éperon interne diagonal 38 s'étend dans chacun des angles de cette seconde chambre 7, chacun des dits éperons présentant, à partir de sa jonction avec la jupe 34, tel que représenté notamment à la figure 3 :
- une première portion 42 de hauteur sensiblement inférieure à celle de la jupe 36,
- et une portion terminale 43 de hauteur supérieure à celle de la jupe 36, adaptée pour former une butée apte à s'étendre au travers d'une lumière 21, 22 ménagée dans la plaque d'étanchéité 19, de façon à maintenir la semelle 29, 32 d'un contact 26, 30 de la pile 25, plaquée sur un plot de connexion 13, 14.

Par ailleurs, la jupe 34 est disposée de façon que la largeur du logement 39 soit sensiblement inférieure au diamètre de la pile 25, et, en vue de la mise en place de cette pile 25 dans le dit logement, deux encoches concaves 40 (figure 2) sont ménagées en vis-à-vis à mi-distance des parois longitudinales délimitant le dit logement.

Enfin, un évidement 41 est ménagé dans la portion de la face de jonction 34 du couvercle 33 délimitant le logement 39, destiné à loger la traverse 27 du contact 26.

Tel que représenté notamment à la figure 3, les dimensions, notamment hauteur ou épaisseur, des éléments constitutifs de l'unité électronique selon l'invention, décrits ci-dessus, sont adaptés pour que :
- les semelles 29, 32 des contacts 26, 30 de la pile 25 disposée dans le logement 39, reposent sur les butées 43 des éperons 38, et soient maintenus plaquées contre les plots de connexion 13, 14 grâce à la déformation de la plaque d'étanchéité 19 maintenue comprimée entre, d'une part, la carte électronique 11 (elle-même positionnée dans son siège 8, 9), et d'autre part, la première portion de longueur 42 des éperons 38 et la pile 25,
- cette déformation de la plaque d'étanchéité 19 assure également un blocage mécanique de la pile 25,
- cette déformation de la plaque d'étanchéité 19 assure également l'étanchéité de la seconde chambre 39 logeant la pile 25.

Par conséquent, l'étanchéité et la tenue mécanique des unités électroniques selon l'invention sont ainsi garanties tout en autorisant un accès rapide et aisé à la pile 25, en vue de son changement ou de sa récupération en fin de vie, obtenu après par un simple dévissage des vis 44.

## Revendications

1. Unité électronique de mesure de paramètres de fonctionnement d'un pneumatique monté sur une roue de véhicule, comprenant un boîtier (1) adapté pour être monté sur la dite roue et intégrant :
• une carte électronique (11) dotée d'une face (11b), dite de connexion, formant un circuit imprimé de connexion de composants électroniques (15), notamment microprocesseur et capteur(s) de mesure, et d'une face opposée (11a), dite d'alimentation électrique,
• et une pile (25), telle que pile bouton, d'alimentation électrique des composants électroniques (15),
la dite unité électronique étant **caractérisée en ce qu'**elle comprend :
• des moyens de connexion électrique entre la pile (25) et la carte électronique (11) comportant, pour chaque pôle de la pile, au moins un plot de connexion (13, 14) ménagé sur la face d'alimentation électrique (11a) de la carte électronique (11), et un contact (26, 30) solidaire de la pile (25) et doté d'une semelle (29, 32) d'appui sur le dit plot de connexion,
• un couvercle (33) d'obturation du boîtier (1) :
- un des deux éléments (1), boîtier ou couvercle, présentant une forme interne adaptée pour délimiter un siège périphérique (8) de réception de la carte électronique (11), ménagé sur le pourtour d'une première chambre (7) adaptée pour loger les composants électroniques (15) de la dite carte électronique (11) positionnée sur le dit siège périphérique,
- et l'autre élément (33), couvercle ou boîtier, délimitant, avec la carte électronique (11) positionnée sur le siège périphérique (8), une seconde chambre (39) adaptée pour loger la pile (25) connectée sur la dite carte électronique,
• et des moyens d'étanchéité compressibles (18) disposés dans la seconde chambre (39) et adaptés, lors de l'obturation du boîtier (1) par le couvercle (33), pour être comprimés :
- d'une part en périphérie de la seconde chambre (39), entre la carte électronique (11) et l'élément (33), couvercle ou boîtier, délimitant la dite seconde chambre, de façon à isoler hermétiquement cette seconde chambre (39),
- et d'autre part au contact de la pile (25), de façon à assurer un blocage mécanique de la dite pile, et une connexion électrique entre cette dernière et la carte électronique (11) par appui de la semelle (29, 32) de chaque contact (26, 30) sur un plot de connexion (13, 14).

2. Unité électronique selon la revendication 1 **caractérisée en ce que** chaque contact (26, 30) de la pile (25) forme un pied (28) adapté pour ménager un espace entre la dite pile et la face d'alimentation électrique (11a) de la carte électronique (11).

3. Unité électronique selon la revendication 2 **caractérisée en ce que** les moyens d'étanchéité (18) comprennent une plaque d'étanchéité (19) en matériau compressible disposée de façon à s'étendre sur la face d'alimentation électrique (11a) de la carte électronique (11), la dite plaque d'étanchéité étant percée de lumières (21, 22) aptes à loger chacune le pied (28) d'un contact (26, 30) de la pile (25), et présentant une épaisseur adaptée pour être comprimée par la dite pile lors de l'obturation du boîtier (1) par le couvercle (33).

4. Unité électronique selon la revendication 3 **caractérisée en ce que** la plaque d'étanchéité (19) comporte une lumière centrale (23) ménagée de façon à s'étendre à l'aplomb de la pile (25), et présentant des dimensions inférieures à celles de la dite pile.

5. Unité électronique selon l'une des revendications 3 ou 4 **caractérisée en ce que** les moyens de connexion électrique entre la pile (25) et la carte électronique (11) comportent, pour chaque pôle de la pile, une paire de plots de connexion (13, 14) ménagés sur la face d'alimentation électrique (11a) de la carte électronique (11), et une paire de semelles associées (29, 32) solidaires de la pile (25), chaque paire de plots (13, 14) définissant un axe (x1), respectivement (x2), tels que les dits axes soient sécants et forment une croix.

6. Unité électronique selon la revendication 5 **caractérisée en ce que** deux plots (13, 14) d'une même paire sont séparés d'une distance différente d'une paire de plots par rapport à l'autre paire de plots.

7. Unité électronique selon l'une des revendications précédentes **caractérisée en ce que** l'élément (33), couvercle ou boîtier, délimitant la seconde chambre (39), comporte, pour chaque plot de connexion (13, 14) ménagé sur la face d'alimentation électrique (11a) de la carte électronique (11), une butée (43) de maintien en appui, contre le dit plot, de la semelle (29, 32) d'un contact (26, 30) de la pile (25).

8. Unité électronique selon l'une des revendications précédentes **caractérisée en ce qu'**elle comprend des moyens amovibles (44) de fixation du boîtier (1) avec le couvercle (33).

9. Unité électronique selon l'une des revendications précédentes **caractérisée en ce que** la première chambre (7) est remplie de résine.
